Europäisches Patentamt

(19) European Patent Office

Office européen des brevets

(11) Veröffentlichungsnummer: **0 019 273**
**B1**

(12) **EUROPÄISCHE PATENTSCHRIFT**

(45) Veröffentlichungstag der Patentschrift: **24.08.83**

(51) Int. Cl.³: **G 03 B 21/10**

(21) Anmeldenummer: **80102675.8**

(22) Anmeldetag: **14.05.80**

(54) **Filmprojektions- und -betrachtungsgerät mit Spulenträgern.**

(30) Priorität: **16.05.79 DE 2919710**

(43) Veröffentlichungstag der Anmeldung:
**26.11.80 Patentblatt 80/24**

(45) Bekanntmachung des Hinweises auf die Patenterteilung:
**24.08.83 Patentblatt 83/34**

(84) Benannte Vertragsstaaten:
**AT FR GB**

(56) Entgegenhaltungen:
**FR - A - 2 195 355**
**US - A - 2 525 552**
**US - A - 3 640 612**

(73) Patentinhaber: **AGFA-GEVAERT Aktiengesellschaft**
**D-5090 Leverkusen 1 (DE)**

(72) Erfinder: **Ungnadner, Peter**
**Ter-Meer-Strasse 4**
**D-8025 Unterhaching (DE)**
Erfinder: **Blöckinger, Peter**
**Franz-Schuster-Strasse 27**
**D-8021 Neuried (DE)**
Erfinder: **Winkler, Friedrich**
**Alfred-Lingg-Strasse 2**
**D-8025 Unterhaching (DE)**
Erfinder: **Lermann, Peter, Dr.**
**D-8152 Naring 106 1/2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Filmprojektions- und -betrachtungsgerät mit Spulenträgern

Die Erfindung betrifft ein Filmprojektions- und -betrachtungsgerät mit Spulenträgern für die Aufwickelspule und für die Abwickelspule mit verschiedenen Spulenabmessungen, mit einer aufwickelseitig angeordneten, schwingungsdämpfenden Ausgleichsvorrichtung für die Filmführung und mit einer abwickelseitig angeordneten Filmablaufbremse.

Bekannte Geräte mit den vorstehend aufgeführten Merkmalen sind baulich aufwendig und machen für den Normalbetrieb mit Spulen verschiedener Kapazität eine kompakte Ausbildung der Filmprojektions- und betrachtungsgeräte praktische unmöglich. Der Erfindung liegt daher die Aufgabe zugrunde, eine Ausbildung für derartige Geräte anzugeben, bei welcher für die vorzugsweise Verwendung von 15-m-Spulen diese auch bei Nichtgebrauch im Gerät verbleiben und ganz in das Gehäuse integrierbar sind, so daß die äußere Gehäuseform nicht beeinträchtigt wird. Dabei soll auch die Verwendung von Filmspulen bis zu einer Kapazität von 120 m Filmlänge ohne weiteres möglich sein.

Die Lösung dieser Aufgabe besteht darin, daß bei einem Filmprojektions- und betrachtungsgerät mit den Merkmalen des Gattungsteils des Anspruchs 1 erfindungsgemäß die in seinem Kennzeichnungsteil aufgeführten Maßnahmen getroffen sind. Ausgestaltungen der Erfindung sind in de Unteransprüchen niedergelegt.

Es ist offensichtlich, daß durch die Erfindung die kompakte Bauform des Gerätes voll erhalten bleibt. So können 15-m-Spulen, wie sie vorzugsweise Verwendung finden, auch bei Nichtgebrauch im Gerät verbleiben. Die konstruktive Verwirklichung der Erfindung erfordert keinen kostspielig großen Aufwand und die Betriebssicherheit des Gerätes ist bei Verwendung von Spulen aller Normgrößen in gleicher Weise gewährleistet.

Die Erfindung ist anhand eines in den Zeichnungen dargestellten Ausführungsbeispiels erläutert. In den Zeichnungen stellen dar:

Figur 1 die prinzipielle Anordnung der Bauteile bei einer erfindungsgemäßen Vorrichtung,

Figur 2 einen Schnitt längs der Linie A—A' durch das Getriebe der Ausgleichsvorrichtung,

Figur 3 schematisch die Ausbildung bei Anordnung von gesonderten Handbedienungstasten für "Vorlauf", "Rückspulen" und "Einzelbildstopp" in Verbindung mit einer Klinkenvorrichtung,

Figur 3a schematisch eine Aufsicht auf ein Detail des Gegenstandes von Fig. 3.

Von dem Projektions- bzw. -betrachtungsgerät ist in den Zeichnungen nur das Gehäuse 1 mit der Optik 1 a angedeutet. An den unteren Ecken sind in Steckachsen 3 und 3' zwei Spulenträger 2 und 2' angeordnet, welche in Form von Kressektor-Bauteilen ausgebildet sind. Diese Spulenträger 2 und 2' sind so eingerichtet, daß auf ihnen Filmspulen mit den verschiedenen Größen für 15 m bis 120 m Filmlänge aufgesetzt werden können, die auf Aufnahmedorne 8, 8' aufgesteckt und von den in Bewegung gesetzten Schwenkachsen 3 und 3' über einfache Zahngetriebe 11, 18, 19 in Drehbewegung versetzt werden. Das Einschwenken oder Ausschwenken der Spulenträger 2 und 2' wird manuell bewirkt.

Die Spulenträger 2 und 2' sind so ausgebildet, daß sie in der Einschwenklage mit den aufgesetzten Spulen 10 und 10' geringeren Durchmessers in das Filmbetrachtungsgerät integriert sind und daß beim Betreiben des Gerätes mit in erster Linie verwendeten 15-m-Spulen diese im Gerät verbleiben können, ohne daß hierdurch die Kompaktbauweise des Gesamtgerätes irgendwie beeinträchtigt würde. Die Spulenträger 2 und 2' sind in ihren Schwenklagern 3 und 3' so gelagert, daß sie in zwei um 180° Schwenkwinkel auseinanderliegenden Raststellungen fixierbar sind.

In bei derartigen Filmprojektions- und -betrachtungsgeräten üblicher Weise ist für die Führung des Films bei Filmspulen größerer Abmessung (ab 15 m) 20, 20' aufwickelseitig eine aus einem unter Federkraft 4b stehenden Schwenkhebel 4a bestehende schwingungsdämpfende Ausgleichsvorrichtung 4 angeordnet, mit der Besonderheit, daß bei eingeschwenkter Betriebsstellung der Spulenträger 2 diese Ausgleichsvorrichtung 4 selbsttätig mit der Schwenkbewegung so steuert, daß sie mittels eines Kurventriebes 4 aus ihrer Wirklage in dem den 15-m-Spulen vorbehaltenen Raum herausgeschwenkt wird.

Dabei wird beim Einschwenken des Spulenträgers 2 im Uhrzeigersinn das freie Ende des Hebels 4a von der Anlagefläche 2c des Spulenträgers 2 erfasst und die Schwingungsdämpfervorrichtung 4 entgegen dem Uhrzeigersinn in die gestrichelt dargestellte Position gedreht, so dass der Führungsstift 4d in die Stellung 4d' gelangt, in der die Schwingungsdämpfvorrichtung arretiert und demnach wirkungslos ist.

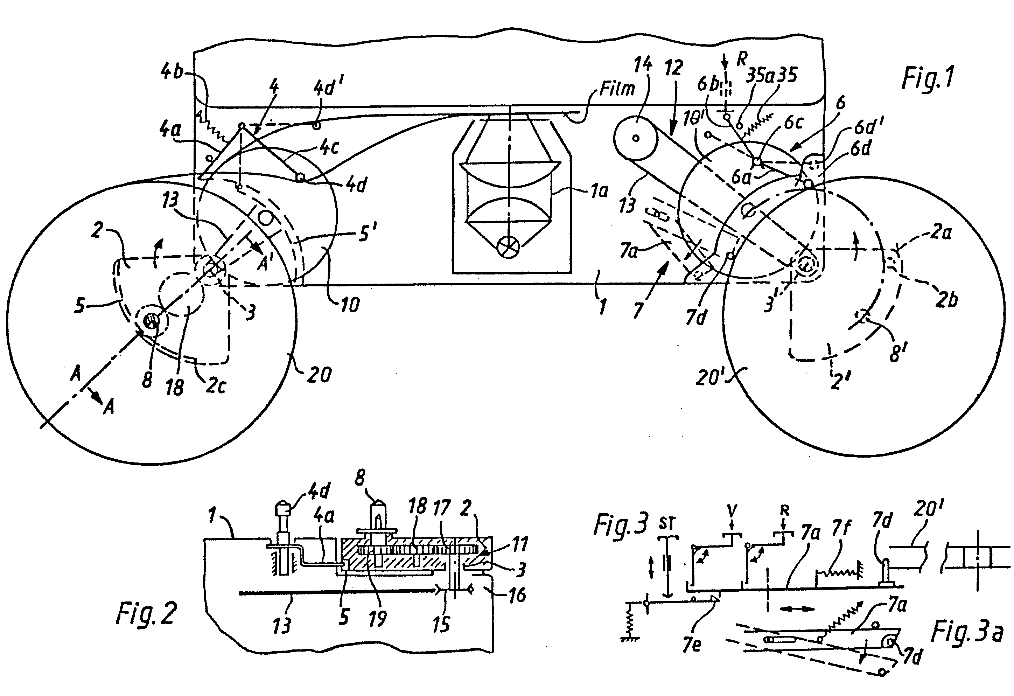

Es ist eine wesentliche Eigenart der erfindungsgemäßen Lösung, daß die Spulenträger 2 und 2' in ihrer Einschwenkstellung samt der auf ihnen aufgesetzten 15-m-Spulen und auch die aufwickelseitig und ggf. auch zusätzlich abwickelseitig vorgesehenen Ausgleichsvorrichtungen 4 sich innerhalb der Konturen des Gerätegehäuses 1, 16 (vgl. Fig. 1 und 2) befinden, so daß die Kompaktbauweise des Gerätes voll erhalten bleibt und die Spulen auch bei Nichtgebrauch am Gerät verbleiben und ggf. mit einer nicht dargestellten Abdeckhaube geschützt werden können.

Für die Verwendung von 120-m-Spulen ist für den Abwickelstopp abwickelseitig eine aus einem Bremshebel 6 bzw. 7 bestehende Filmablaufbremse angeordnet, die in eingeschwenkter Stellung des Spulenträgers 2' ebenfalls durch dessen Schwenkbewegung gesteuert am Spulenträger 2 über eine Kurve 2a aus dem Bereich der 15-m-Spule herausschwenkbar ist. Die in bekannter Weise drehrichtungsabhängig arbeitende Filmablaufbremse 6 oder 7 wird in ihrer Arbeitsstellung jedoch erst wirksam, wenn eine die Rückspulfunktion betätigende Handbedienungstaste R betätigt worden ist (Fig. 1).

In der Figur 1 sind zwei Ausführungsformen einer solchen Spulenbremse angegeben, die wahlweise verwendet werden können.

Die erste, mit 6 bezeichnete Ausführungsform besteht aus einem zweiarmigen, abgewinkelten, um einen Drehpunkt 6c beweglichen Hebel, der mit einer Feder 35 im Ausgangszustand an einem Anschlag 35a gehalten wird. Das freie Ende des Hebelarmes 6a trägt einen Bremsstift 6d, der an der grossen Spule 20' anliegt und diese bremst. Wird der Rücklauf des Filmes eingeleitet, so ist die Bremswirkung unerwünscht. Deshalb ist der andere Hebelarm 6b mit der Rücklauftaste R so gekoppelt, dass bei deren Betätigung der Bremsstift 6d von der Spule 20' abgeschwenkt wird und diese nicht mehr beeinflusst.

Bei einer kleinen Spule 10' ist eine Bremsung nicht zweckmässig, da hierfür die normale Lagerfriktion ausreicht. Wenn der Spulenträger 2' entgegen dem Uhrzegersinn in die Innenlage geschwenkt wird, schwenkt er mit seiner Fläche 2a den Hebelarm 6a in die gestrichelte Position, wo der Bremsstift in der unwirksamen Stellung 6d' liegt.

Eine andere Ausführungsform der abschaltbaren Spulenbremse ist mit dem Bezugszeichen 7 bezeichnet und in den Figuren 3 und 3a näher dargestellt. Mit der vorigen Ausführungsform hat sie gemeinsam, dass sie bei Einschwenken des Spulenträgers 2' ausser Funktion gesetzt wird, und zwar in diesem Falle mit einem Stift 2b. Der Bremsstift 7d entspricht dem Stift 6d der anderen Lösung.

In der Projektionsstellung liegt dieser Stift 7d ebenfalls an Spulenrand an und bremst diesen. Durch Ausschwenken mit Hilfe des Stiftes 2b wird der in einem Langloch verschieb- und schwenkbar gelagerte Träger 7a des Stiftes 7d aus dem Wirksamkeitsbreich gebracht.

Der Träger 7a und damit die Bremse ist, wie Figur 3 zu entnehmen ist, mit den bezeichneten Tagsten ST(=STOP), V(=Vorlauf) und R(=Rücklauf) in folgender Weise zu betätigen:

In der dargestellten Stellung liegt der Bremsstift wirksam an der Spule 20' an. Wird die Taste "R" gedrückt, wandert der Schieber 7a nach links und wird in der untätigen Stellung von einer Klinke 7e gehalten. Das gleiche geschieht bei Betätigung der Taste "V", die zum schnellen, ungebremsten Vorlauf benutzt wird. Durch Betätigen der Taste "ST" wird — abgesehen von anderen Funktionen, die hier nicht näher interessieren — die Klinke 7e ausgehoben und der Träger 7a bewegt sich unter Wirkung der Feder 7f nach rechts, so dass der Bremsstift 7d wieder zur Anlage an die Spule 20' kommt.

Bezüglich der Dorne 8 und 8' in den Spulenträgern 2 und 2' ist in den Zeichnungen (Fig. 1 und 2) nur angedeutet, daß diese über einen Riemenantrieb 12, 14, 13, 15; eine in der Schwenkachse 3 konzentrisch verlaufende Welle, auf die der Antrieb wirkt, und über eine Zahnradgetriebe 17, 18, 19 angetrieben werden. Dieser Sachverhalt ist aus den Zeichnungen deutlich ersichtlich und bedarf keiner näheren Erläuterung der Einzelheiten.

## Patentansprüche

1. Filmprojektions- und -betrachtungsgerät mit Spulenträgern für die Aufwickelspule und für die Abwickelspule mit verschiedenen Spulenabmessungen, mit einer aufwickelseitig angeordneten, schwingungsdämpfenden Ausgleichsvorrichtungen für die Filmführung und mit einer abwickelseitig angeordneten Filmablaufbremse, dadurch gekennzeichnet,

— daß die Spulenträger (2, 2') in zwei mechanisch definierte Betriebsstellungen ein- und ausschwenkbar sind,

— daß durch das Bewegen der Spulenträger (2, 2') in ihre Einschwenklagen bezüglich des Gerätegehäuses (1) als Betriebsstellung für Filmspulen bis 15 m Filmlänge die Ausgleichsvorrichtung (4) und die Filmablaufbremse (6 oder 7) selbsttätig aus ihren Wirklagen in dem Gehäusebereich, der bei eingeschwenkten, mit Spulen versehenen Spulenträgern von diesen Spulen eingenommen wird, ausschwenkbar sind und

— daß die Ausgleichsvorrichtung und die Filmablaufbremse sowohl in ihrer Wirklage als auch in ihrer Außerbetriebslage ebenso wie die Spulenträger (2, 2') samt den aufgesetzten Spulen für bis zu 15 m Filmlänge vollständig innerhalb des Gerätegehäuses (1) integriert sind.

2. Filmprojektions- und -betrachtungsgerät nach Anspruch 1, dadurch gekennzeichnet, daß die Filmspulenträger (2, 2') als kreissektorförmige Bauteile ausgebildet sind und in unmittelbarer Nähe der unteren Gehäuseecken des Gerätegehäuses in Drehlagern (3, 3') so gelagert sind, daß sie in um einen Winkel von 180° voneinander abstehenden Rastlagen fixierbar sind.

3. Filmprojektions- und -betrachtungsgerät nach Anspruch 1, dadurch gekennzeichnet, daß die als gehäusefest gelagerter, federnder Schwenkhebel (4c) ausgebildete Ausgleichsvorrichtung (4) mittels einer mit dem aufwickelseitigen Spulenträger (2) verbundenen Führungskurve (5) mit dem Verschwenken dieses Spulenträgers (2) in ihre Wirkstellung und in ihre Außerwirkungsstellung zu dem Filmführungspfad bringbar ist.

4. Filmprojektions- und -betrachtungsgerät nach Anspruch 1 und 2, dadurch gekennzeichnet, daß mit dem Schwenken des abwickelseitigen Spulenträgers (2′) in seine Einschwenkstellung bezüglich des Gerätegehäuses (1) die Filmablaufbremse (6) mit dem Bremshebel (6d) über eine Kurventrieb (2a) aus dem einer Abwickelspule für bis zu 15 m Filmlänge vorbehaltenen Raumbereich herausschwenkbar und aus ihrer Arbeitsstellung bewegbar ist und daß die Filmablaufbremse (6) in ihrer Arbeitsstellung erst durch Betätigen einer das Rückspulen steuernden Taste (R) freisteuerbar ist.

5. Filmprojektions- und -betrachtungsgerät nach Anspruch 1 bis 4, dadurch gekennzeichnet, daß ein an dem abwickelseitigen Spulenträger (2′) angeordneter Stift (2b) beim Einschwenken des Spulenträgers (2′) die Filmablaufbremse (7) mit ihrem Bremshebel (7d) aus dem einer 15-m-Spule vorbehaltenen Raum herausschwenkt.

## Claims

1. Film projection and viewing apparatus with spool carriers for the wind-on spool and for the wind-off spool with different spool dimensions, having an impact-damping equalizing device disposed on the wind-on side for the film guiding and having a film run-off braking device on the wind-off side, characterized in that,

— the spool carriers (2, 2′) may be swung into and out of two mechanically defined operating positions;

— in that, by moving the spool carriers (2, 2′) into their swung-in positions with respect to the apparatus housing (1) as the operating position for film spools with up to 15 m length of film, the equalizing device (4) and the film run-off braking device (6 or 7) may be automatically swung out of the operating positions in the housing area which is occupied by these spools when the spool carriers, provided with spools, are swung in; and

— in that in their operating position and also in their non-operating position, the equalizing device and the film run-off braking device as well as the spool carriers (2, 2′) together with the mounted spools for film lengths up to 15 m are completely integrated inside the apparatus housing (1).

2. Film projection and viewing apparatus according to Claim 1, characterized in that the film spool carriers (2, 2′) are formed as sector-shaped structural components and are mounted in the immediate vicinity of the lower housing corners of the apparatus housing in pivot bearings (3, 3′) such that they may be fixed in stop positions spaced from one another at an angle of 180°.

3. Film projection and viewing apparatus according to Claim 1, characterized in that the equalizing device (4), which is constructed as a resilient rocking lever (4c) mounted rigidly with the housing, may be brought to the film guiding path by means of a guide cam (15) connected to the spool carrier (2) on the wind-on side as this spool carrier (2) swings into its operating position and into its non-operating position.

4. Film projection and viewing apparatus according to Claims 1 and 2, characterized in that as the spool carrier (2′) on the wind-off side swings into its swung-in position with respect to the apparatus housing (1), the film discharge brake (6) with the brake lever (6d) may be swung out of the space reserved for a wind-off spool for film lengths up to 15 m, via a cam drive (2a), and may be moved out of its operating position, and in that, in its operating position, the film run-off device (6) is only freely controllable by actuating a push button (R) controlling the return winding.

5. Film projection and viewing apparatus according to Claims 1 to 4, characterized in that a pin (2b), disposed on the spool carrier (2′) on the wind-off side, swings the film run-off braking device (7) with its brake lever (7d) out of the space reserved for a 15 m-spool when the spool carrier (2′) is swung in.

## Revendications

1. Appareil pour projeter at visionner des films comprenant des supports de bobines pour la bobine réceptrice et pour la bobine débitrice, les dimensions des bobines étant différentes, un dispositif de compensation amortissant les oscillations, disposé du côté de la bobine réceptrice et destiné à guider le film et un frein de déroulement du film disposé du côté de la bobine débitrice, caractérisé en ce que:

— les supports de bobines (2, 2′) peuvent rentrer et sortir en pivotant dans deux positions de fonctionnement définies mécaniquement,

— par l'amenée de bobines (2, 2′) dans leur position rentrée par rapport au boîtier de l'appareil (1), servant de position de fonctionnement pour des bobines de film ayant jusqu'à 15 m de longueur, le dispositif de compensation (4) et le frein (6 ou 7) de déroulement du film sont susceptibles de pivoter automatiquement hors de leur position active dans la région du boîtier qui, lorsque les supports de bobines munis de bobines sont en position rentrée, est occupée par ces bobines, et

— le dispositif de compensation et le frein de déroulement dul film sont tant dans leur position active que dans leur position inactive, tout comme les supports de bobines (2, 2′) ensemble avec les bobines qui y sont placées pour des longueurs de film allant jusqu'à 15 m, entièrement intégrées à l'intérieur du boîtier de l'appareil (1).

2. Appareil pour projeter et pour visionner des films selon la revendication 1, caractérisé en ce que les supports de bobines de film (2, 2') sont constitués de pièces en forme de secteur de cercle et sont montés au voisinage immédiat des sommets inférieurs de boîtier de l'appareil dans des paliers de pivotement (3, 3') de manière à pouvoir être immobilisés dans ces positions d'arrêt disposées à 180° l'une de l'autre.

3. Appareil pour projeter et pour visionner des films, selon la revendication 1, caractérisé en ce que le dispositif de compensation (4), agencé en levier pivotant (4c) monté fixe sur le boîtier et sollicité élastiquement, peut être amené, au moyen d'une came de guidage (5) reliée au support de bobine (2) se trouvant du côté de la bobine réceptrice, par le pivotement de ce support de bobine (2), en sa position active et en sa position inactive par rapport à la voie de guidage du film.

4. Appareil pour projeter et pour visionner des films selon les revendications 1 et 2, caractérisé en ce que par le pivotement du support de bobine (2') se trouvant du côté de la bobine débitrice, dans sa position rentrée par rapport au boîtier de l'appareil (1), le frein de déroulement du film (6) peut, par l'intermédiaire d'un entraînement à came (2a), pivoter hors d'une région réservée à une bobine débitrice pour des longueurs de film allant jusqu'à 15 m et être amené hors de sa position de fonctionnement et en ce que le frein de déroulement de film dans sa position de fonctionnement ne peut être commandé librement qu'en manoeuvrant une touche (R) commandant le rebobinage.

5. Appareil pour projeter et pour visionner des films, selon les revendications 1 à 4, caractérisé en ce qu'une cheville (2b) disposée sur le support de bobine (2') se trouvant du côté de la bobine débitrice fait pivoter, lors de la rentrée en pivotant du support de bobine (2'), le frein de déroulement de film (7) avec sont levier de frein (7d) hors de l'espace réservé à une bobine de 15 m.

Fig.1

Fig.2

Fig.3

Fig.3a

0019273